# EUROPEAN PATENT APPLICATION

(11) **EP 4 497 613 A1**
(43) Date of publication of application: **29.01.2025**
(21) Application number: 24187427.0
(22) Date of filing: 09.07.2024
(51) Int. Cl.: B60C 13/00, B60C 13/02

(54) **TIRE**

(30) Priority: 27.07.2023 JP 2023122639
(71) Applicant: Sumitomo Rubber Industries, Ltd., Kobe-shi, Hyogo 651-0072 (JP)
(72) Inventor: IWASHITA, Takeru, Kobe-shi, 651-0072 (JP)
(74) Representative: Manitz Finsterwald Patent- und Rechtsanwaltspartnerschaft mbB

(57) **Abstract**

A tire has a pair of sidewall portions. At least one of the sidewall portions has a reference surface and a raised portion raised outward in a tire axial direction. The raised portion extends continuously in a tire circumferential direction in an annular shape. The raised portion includes a tire maximum width position. The raised portion is provided with a mark portion including a plurality of characters recessed axially inward.

## Description

### RELATED APPLICATIONS

This application claims the benefit of foreign priority to Japanese Patent Application No. JP2023-122639, filed July 27, 2023, which is incorporated by reference in their entirety.

### TITLE OF THE INVENTION

### TIRE

### FIELD OF THE INVENTION

The present invention relates to a tire.

### BACKGROUND OF THE INVENITON

Japanese Unexamined Patent Application Publication No. 2019-167067 has proposed a tire including a sidewall portion provided with a mark indicating portion having one or more marks. The mark indicating portion has a base portion protruding at a constant height from the surface of the sidewall portion. The tires configured as such are said to improve the visibility of the marks.

### SUMMARY OF THE INVENTION

In recent years, it has been desired, while maintaining the visibility of the marks, to improve life performance of tires such as those mentioned above, especially those for commercial vehicles used under heavy loads.

The present invention was made in view of the above issue, and a primary object thereof is to provide a tire capable of improving the life performance while maintaining the visibility of the marks.

A tire including:
a pair of sidewall portions; and
a raised portion provided in at least one of the sidewall portions and raised outward in a tire axial direction from a reference surface of the at least one of the sidewall portions, wherein
the raised portion extends continuously in a tire circumferential direction in an annular shape,
the raised portion includes a tire maximum width position, and
the raised portion is provided with a mark portion including a plurality of characters recessed axially inward.

By adopting the above configuration, it is possible that the tire of the present invention improves the life performance while maintaining the visibility of the marks.

### BRIEF DESCRIPTION OF THE DRAWINGS

FIG. 1 is a right half of a tire meridian section of a tire according to an embodiment of the present invention.
FIG. 2 is an enlarged side view of the tire.
FIG. 3 is a perspective cross-sectional view of the tire.
FIG. 4 is an enlarged view of FIG. 1.
FIG. 5A is an enlarged view of one of the marks of FIG. 3.
FIG. 5B is a cross-sectional view taken along A-A line of FIG. 5A.

### DETAILED DESCRIPTION OF THE INVENTION

An embodiment of the present invention will now be described in conjunction with accompanying drawings. The drawings may contain exaggerated representations and representations that differ from the actual dimensional ratios of the structure in order to aid in the understanding of the present invention. Further, in cases where there are multiple embodiments, the identical or common elements are denoted by the same reference numerals throughout the specification, and redundant explanations will be omitted.

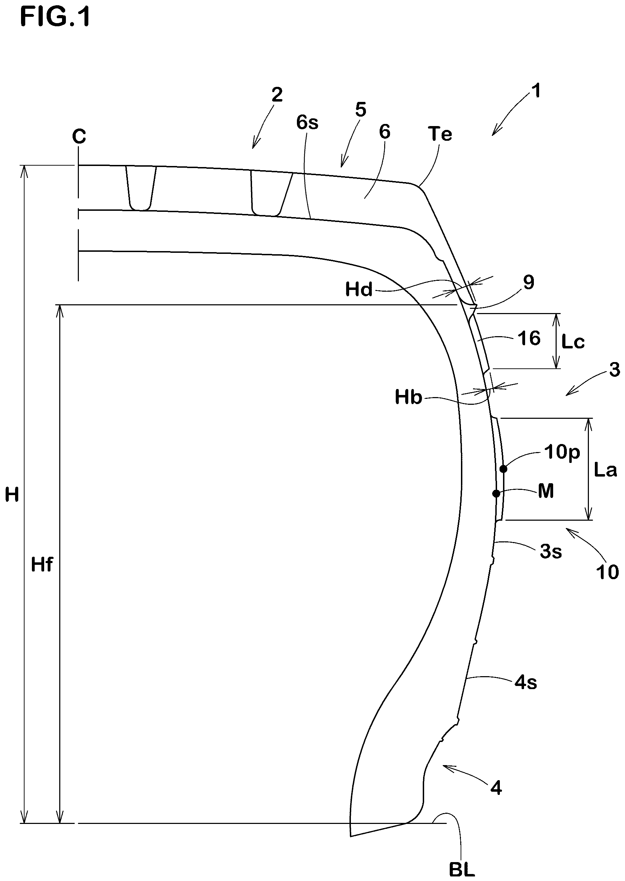

FIG. 1 is a right half of a tire meridian section of a tire 1 passing all through a tire rotational axis thereof (not shown). FIG. 1 shows a pneumatic tire for passenger cars as a preferred form, more specifically, a tire for commercial vehicles that are expected to be used under relatively high loads. However, it should be noted that the present invention may also be applied to pneumatic tires for light trucks and for heavy duty and to non-pneumatic tires that are not filled with pressurized air inside the tires.

In the present specification, unless otherwise noted, dimensions and the like of various parts of the tire 1 are the values measured under a standard state. The term "standard state" refers to a state in which the tire 1 is mounted on a standard rim (not shown), inflated to a standard inner pressure, and loaded with no tire load.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO.

The tire 1 includes a pair of sidewall portions 3 (one of the sidewall portions 3 is shown in FIG. 1). The tire 1 further includes a pair of bead portions 4 (one of the bead portions 4 is shown in FIG. 1) each located radially inside a respective one of the sidewall portions 3, and a tread portion 2 connecting the sidewall portions 3.

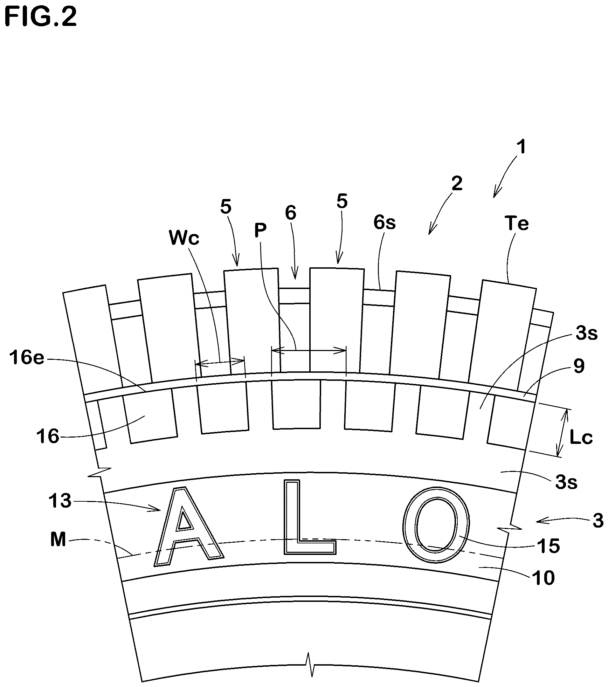

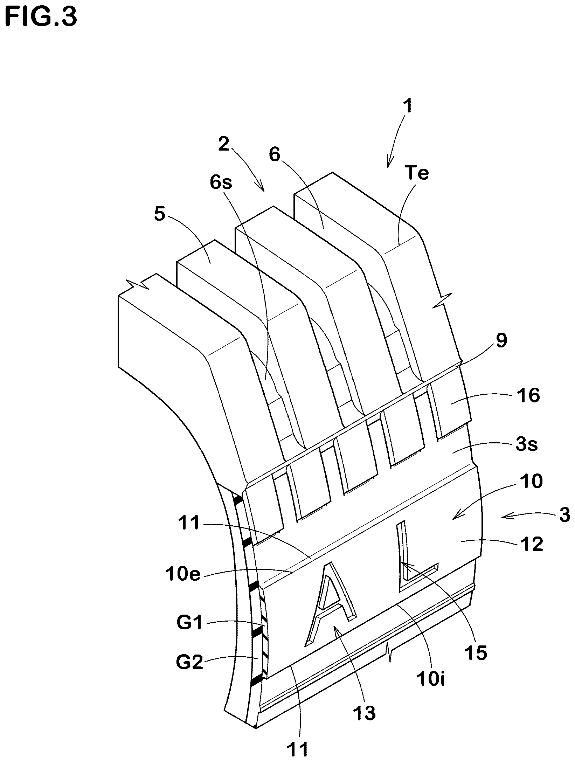

FIG. 2 is an enlarged side view of the tire 1. FIG. 3 is a perspective cross-sectional view of the tire 1. As shown in FIGs. 1 through 3, at least one of the pair of the sidewall portions 3 is provided with a raised portion 10 raised outward in a tire axial direction from a reference surface (3s). The tire 1 in the present embodiment has the raised portion 10 on each sidewall portion 3. It should be noted that the tire 1 may have the raised portion 10 on only one of the sidewall portions 3.

The raised portion 10 extends continuously in a tire circumferential direction in an annular shape. The raised portion 10 configured as such protects the sidewall portions 3 continuously in the tire circumferential direction. The raised portion 10 also forms a tire maximum width position (M). The area near the tire maximum width position (M) is the area where is most likely to contact with curbs and other objects protruding from the road surface. Therefore, the raised portion 10 which forms the tire maximum width position (M) effectively suppresses damage to carcass plies (not shown) and the like due to contact with curb stones and the like, thereby, it is possible that protection property and thus the life performance are improved. The "tire maximum width position (M)" is the position where the reference surface (3s) extends outermost in the tire axial direction.

The raised portion 10 is provided with a mark portion 13 including a plurality of characters recessed axially inward. The mark portion 13 configured as such can maintain high visibility of the mark portion 13 even if the raised portion 10 is worn away by curbs and the like, for example. Further, the mark portion 13 reduces the rubber volume of the raised portion 10, which suppresses heat generation in the sidewall portions 3 during running, therefore, it is possible that the durability and thus the life performance of the tire 1 are improved. Excessive heat generation in the tire 1 deteriorates the rubber in the sidewall portions 3, resulting in poor steering stability. The above-mentioned "characters" include European letters, numbers, and symbols, which show the name of the tire manufacturer, brand name, size, and the like, for example. The mark portion 13 in the present embodiment is formed only by a plurality of characters, for example. In addition, the mark portion 13 includes recessed spaces 15. Each recessed space 15 forms a letter.

The tread portion 2 in the present embodiment is provided with a plurality of shoulder blocks 5 including tread edges (Te) and shoulder axial grooves 6 extending in the tire axial direction between the shoulder blocks adjacent to each other so as to each cross a respective one of the tread edges (Te).

For pneumatic tires, the tread edges (Te) are the axially outermost positions where the tire 1 contacts a plane under a standard tire load loaded state. The standard tire load loaded state is a state in which the tire 1 in the standard state is in contact with the plane with zero camber angle by being loaded with a standard tire load. The term "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

Moreover, each of the sidewall portions 3 in the present embodiment includes an annular portion 9 extending continuously in the tire circumferential direction centered on the tire rotational axis. The annular portion 9 is formed so as to be raised axially outward from the reference surface (3s), for example. The annular portion 9 is located radially outside the tire maximum width position (M). Further, the annular portion 9 in the present embodiment is connected with the shoulder axial grooves 6. Furthermore, a separation distance (Hf) between the annular portion 9 and a bead baseline (BL) in the tire radial direction is preferably 70% or more and more preferably 75% or more of a tire section height (H). The separation distance (Hf) is preferably 90% or less and more preferably 85% or less of the tire section height (H). The "tire section height (H)" is a radial distance from the bead baseline (BL) to the radially outermost position of the tire 1. The "bead baseline (BL)" is a tire axial direction line that passes through the rim diameter position.

In each of the sidewall portions 3 in the present embodiment, the reference surface (3s) is formed by a hidden surface and an outer surface. The hidden surface is recessed in the tire axial direction from the surface of the sidewall portion 3 and hidden by partial unevenness such as the annular portion 9, the raised portion 10, and protective ribs for preventing rim detachment. The outer surface of the reference surface (3s) is connected smoothly with the hidden surface and is a part of the surface of the sidewall portion 3. The reference surface (3s) of the present embodiment is formed so as to smoothly connect groove bottoms (6s) of the shoulder axial grooves 6 and an outer surface (4s) of a respective one of the bead portions 4 in the tire meridian section.

The raised portion 10 is formed so that a length (La) thereof in the tire radial direction is continuously the same in the tire circumferential direction, for example. It should be noted that the raised portion 10 may have the length (La) varying in the tire circumferential direction (not shown).

In general tire 1, curbs and other objects protruding from the road surface are more likely to come into contact with the radially outer area from the tire maximum width position (M) than with the radially inner area from the tire maximum width position (M). Therefore, the raised portion 10 in the present embodiment has a middle position (10p) in the tire radial direction located radially outside the tire maximum width position (M). Thereby, it is possible that damage to the tire 1 is suppressed more effectively.

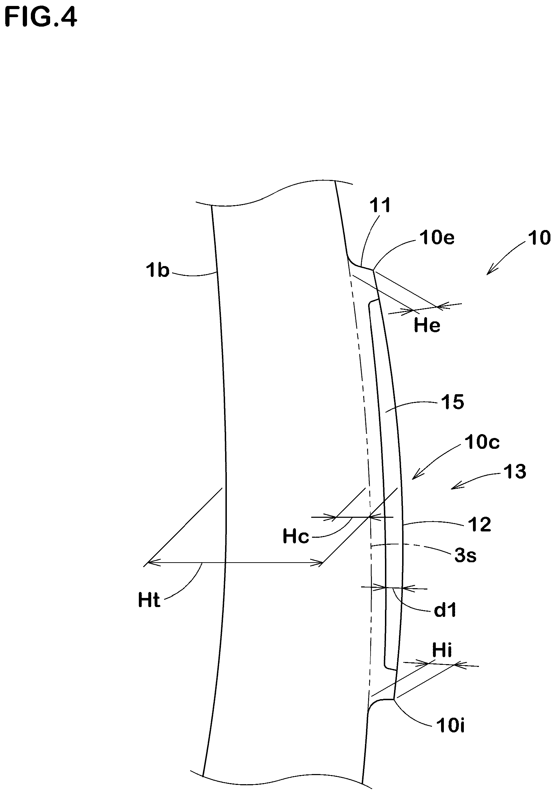

FIG. 4 is an enlarged view of the raised portion 10 of FIG. 1. As shown in FIG. 4, the raised portion 10 includes an outer edge (10e) in the tire radial direction, an inner edge (10i) in the tire radial direction, and a middle portion (10c) in the tire radial direction. Further, the raised portion 10 has a protruding height in the tire axial direction from the reference surface (3s). The "protruding height" means a length in the normal direction of the reference surface (3s) in the tire meridian section. The middle portion (10c) is a portion between the outer edge (10e) and the inner edge (10i) and includes the middle position (10p) (shown in FIG. 1) between the outer edge (10e) and the inner edge (10i).

The raised portion 10 includes wall surfaces 11 extending in the tire axial direction from the reference surface (3s) and an outward surface 12 connected to the wall surfaces 11, located axially outermost, and facing outward in the tire axial direction, for example. The wall surfaces 11 extend continuously in the tire circumferential direction in the present embodiment. The outer edge (10e) and the inner edge (10i) are formed at the intersections of the wall surfaces 11 and the outward surface 12.

In the tire meridian section, the outward surface 12 of the present embodiment is formed in an arc shape. The outward surface 12 configured as such can reduce damage by dispersing the impact caused by contact with curbs in multiple directions. It should be noted that the outward surface 12 may be formed in a shape tapered axially outward in the tire meridian section, for example.

The middle portion (10c) of the raised portion 10 has a protruding height (He) larger than a protruding height (He) at the outer edge (10e) and a protruding height (Hi) at the inner edge (10i), for example. Therefore, the tire volume is reduced on the outer edge (10e) side and the inner edge (10i) side to suppress heat generation during running as well as the protection property is improved in the middle portion (10c). As just described above, the protruding height of the raised portion 10 in the present embodiment is continuously decreasing from the middle portion (10c) to the outer edge (10e) and the inner edge (10i).

In order to effectively exert the above-mentioned effects, it is preferred that the protruding height (He) of the middle portion (10c) is 4 or less times the protruding heights (He) and (Hi) at the outer edge (10e) and inner edge (10i). In order to increase the life performance while maintaining visibility of the mark portion 13, the protruding height (He) of the middle portion (10c) is more preferably 1.1 or more times the protruding heights (He) and (Hi) of the outer edge (10e) and the inner edge (10i), and more preferably 2 or less times the protruding heights (He) and (Hi). Although not particularly limited, it is preferred that the protruding height (He) of the middle portion (10c) is from 0.5 to 5 mm, for example.

Further, the protruding height (He) of the middle portion (10c) is preferably 5% or more, more preferably 10% or more of a tire thickness (Ht) passing through the middle portion (10c), i.e., the tire thickness (Ht) at the middle portion (10c). The protruding height (Hc) is preferably 50% or less, more preferably 35% or less of the tire thickness (Ht). Since the protruding height (He) of the middle portion (10c) is 5% or more of the tire thickness (Ht), the sidewall portions 3 can be effectively protected. Since the protruding height (He) of the middle portion (10c) is 50% or less of the tire thickness (Ht), excessive increase in mass due to the mark portion 13 can be suppressed. The tire thickness (Ht) means a length in the normal direction of the tire inner cavity surface (1b), and is the length between the tire inner cavity surface (1b) and the outward surface 12.

As shown in FIG. 1, the length (La) of the raised portion 10 in the tire radial direction is preferably 5% or more, more preferably 10% or more of the tire section height (H) (shown in FIG. 1). The length (La) is preferably 30% or less, more preferably 25% or less of the tire section height (H). Since the length (La) of the raised portion 10 is 5% or more of the tire section height (H), the sidewall portion 3 can be effectively protected from coming into contact with curbs. Since the length (La) of the raised portion 10 is 30% or less of the tire section height (H), the rubber volume of the raised portion 10 can be suppressed from becoming excessively large, thereby, heat generation during running can be suppressed.

The mark portion 13 has a depth (d1) (the depth of the recessed space 15). The depth (d1) is preferably 30% or more, more preferably 40% or more of the protruding height (He) of the middle portion (10c). The depth (d1) is preferably 80% or less, more preferably 70% or less of the protruding height (He) of the middle portion (10c). Since the depth (d1) of the mark portion 13 is 30% or more of the protruding height (He) of the middle portion (10c), the mass of the tire 1 is effectively reduced, therefore, it is possible that heat generation during running is suppressed. Since the depth (d1) of the mark portion 13 is 80% or less of the protruding height (He) of the middle portion (10c), excessive decrease in the rigidity of the raised portion 10 can be suppressed, thereby, it is possible that damage caused by contact with curbs is suppressed.

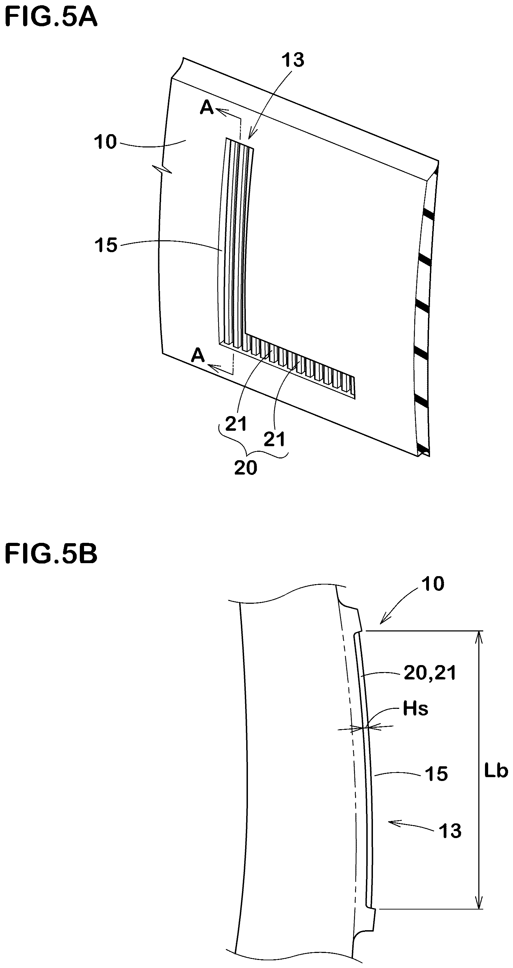

FIG. 5A is an enlarged perspective view of the mark portion 13 of FIG. 2. FIG. 5B is a cross-sectional view taken along A-A line in FIG. 5A. As shown in FIG. 5A, the recessed space 15 in the present embodiment has a serration 20 in which a plurality of ridges 21 are arranged. The serration 20 configured as such has the effect of making the letters appear darker, improving the visibility of the mark portion 13, and suppressing the heat generation in the raised portion 10 during running. Each of the ridges 21 extends in the tire radial direction in order to effectively support the load of the tire 1 in the present embodiment.

The ridges 21 have a maximum height (Hs) which is preferably 30% or more, more preferably 50% or more of the depth (d1) of the recessed space 15 (shown in FIG. 4). The maximum height (Hs) is preferably 70% or less, more preferably 60% or less. Since the maximum height (Hs) of the ridges 21 is 40% or more of the depth (d1) of the recessed space 15, it is highly effective in absorbing the light irradiated on the recessed space 15, which improves the visibility of the mark portion 13. Since the maximum height (Hs) of ridges 21 is 70% or less of the depth (d1) of the recessed space 15, excessive mass increase due to ridges 21 is suppressed.

The recessed space 15 (above-described letter) has a length (Lb) in the tire radial direction which is preferably 50% or more, more preferably 70% or more of the length (La) in the tire radial direction of the raised portion 10. The length (Lb) of the recessed space is preferably 90% or less, more preferably 80% or less of the length (La) of the raised portion 10. Since the length (Lb) of the recessed space 15 is 50% or more of the length (La) of the raised portion 10, it is possible that the mark portion 13 (letter) is clearly recognized. Since the length (Lb) of the recessed space 15 is 90% or less of the length (La) of the raised portion 10, the rigidity of the raised portion 10 is maintained, therefore, it is possible that the damage caused by contact with curbs is suppressed.

As shown in FIGs. 1 to 3, one of the pair of the sidewall portions 3 in the present embodiment has outer raised portions 16 raised outward in the tire axial direction from the reference surface (3s). The outer raised portions 16 in the present embodiment are located radially outside the raised portion 10. It is possible that the outer raised portions 16 configured as such further suppress the damage caused by contact of the sidewall portions 3 with curbs. The outer raised portions 16 and the raised portion 10 are separated and spaced apart by the reference surface (3s) (the above-mentioned outer surface), for example. The outer raised portions 16 in the present embodiment are located radially inside the annular portion 9 and are connected to the annular portion 9.

The multiple outer raised portions 16 are arranged in the tire circumferential direction. Specifically, each of the outer raised portions 16 is formed in a rectangular block shape in a side view of the tire 1. Further, the outer raised portions 16 adjacent to each other in the tire circumferential direction are separated and spaced apart by the reference surface (3s) (the outer surface mentioned above). These outer raised portions 16 configured as such suppress excessive increase in mass of the tire 1. In order to achieve a good balance between the effect of suppressing damage and the effect of suppressing heat generation of the outer raised portions 16, a length (Wc) in the tire circumferential direction of each of the outer raised portions 16 is preferably 40% or more, more preferably 50% or more of a circumferential pitch (P) of the outer raised portions 16. The length (Wc) is preferably 90% or less, more preferably 80% or less of the circumferential pitch (P). The length (Wc) and the circumferential pitch (P) of the outer raised portions 16 are measured at outer ends (16e) in the tire radial direction of the outer raised portions 16.

Each of the outer raised portions 16 has a length (Lc) in the tire radial direction which is smaller than the length (La) in the tire radial direction of the raised portion 10, for example. As a result, the raised portion 10 can effectively suppress damage near the tire maximum width position (M) where damage caused by curb stones is most likely to occur. Further, an excessive increase in the mass of the tire 1 can be suppressed in the portion radially inside the annular portion 9, where damage is relatively less likely to occur. From this point of view, the length (Lc) of the outer raised portions 16 is preferably 40% or more, more preferably 45% or more of the length (La) of the raised portion 10. The length (Lc) of the outer raised portions 16 is preferably 60% or less, more preferably 55% or less of the length (La) of the raised portion 10.

It is preferred that the protruding height (Hb) in the tire axial direction of the outer raised portions 16 from the reference surface (3s) is equal to or less than the protruding height (He) of the middle portion (10c). Since the area where outer raised portions 16 are provided is less likely to come into contact with curbs than the area around the tire maximum width position (M), it is possible that damage of the above region caused by the curbs is suppressed as well as the heat generation is suppressed to maintain the durability of the tire 1 at a high level by setting the protruding height (Hb) equal to or smaller than the protruding height (Hc). Although not particularly limited, the protruding height (Hb) is preferably 30% or more, more preferably 40% or more of the protruding height (Hc). The protruding height (Hb) is preferably 90% or less, more preferably 60% or less of the protruding height (Hc).

The protruding height (Hb) of the outer raised portions 16 in the present embodiment is smaller than a protruding height (Hd) in the tire axial direction of the annular portion 9. Therefore, the durability of the tire 1 is further maintained high. Although not particularly limited, the protruding height (Hb) is preferably 55% or more, more preferably 60% or more of the protruding height (Hd). the protruding height (Hb) is preferably 75% or less, more preferably 70% or less of the protruding height (Hd).

As shown in FIG. 3, one of the pair of the sidewall portions 3 includes a first rubber portion G1 forming the raised portion 10 and a second rubber portion G2 forming the reference surface (3s). The first rubber portion G1 and the second rubber portion G2 are adjacent to each other in the tire axial direction, for example. The second rubber portion G2 forms the portion axially inside the reference surface (3s) and is disposed between the first rubber portion G1 and the carcass plies (not shown). The first rubber portion G1 is formed to have a rubber hardness (h1) larger than a rubber hardness (h2) of the second rubber portion G2. It is possible that the first rubber portion G1 having the rubber hardness (h1), which is relatively high, suppresses damage to the raised portion 10 caused by curbs and the like. The second rubber portion G2 having the rubber hardness (h2), which has relatively low, maintains the basic performance of the tire 1, such as ride comfort and the like, at a high level. Although not particularly limited, a difference (h1-h2) between the rubber hardness (h1) of the first rubber portion G1 and the rubber hardness (h2) of the second rubber portion G2 is preferably 0.5 or more, and more preferably 1 or more. The difference (h1-h2) is preferably 8 or less, and more preferably 5 or less. In the present specification, the rubber hardness is hardness measured by a type-A durometer in an environment of 23 degrees Celsius in accordance with Japanese Industrial Standard JIS-K6253.

While detailed description has been made of the tire according to an especially preferred embodiment of the present invention, the present invention can be embodied in various forms without being limited to the illustrated embodiment.

### [ Statement of Invention ]

The present invention includes the following aspects.

### [ Present Invention 1 ]

A tire including:
a pair of sidewall portions; and
a raised portion provided in at least one of the sidewall portions and raised outward in a tire axial direction from a reference surface of the at least one of the sidewall portions, wherein
the raised portion extends continuously in a tire circumferential direction in an annular shape,
the raised portion includes a tire maximum width position, and
the raised portion is provided with a mark portion including a plurality of characters recessed axially inward.

### [ Present Invention 2 ]

The tire according to Present Invention 1, wherein
the raised portion includes an outer edge in a tire radial direction, an inner edge in the tire radial direction, a middle portion in the tire radial direction, and a protruding height in the tire axial direction from the reference surface, and
the raised portion has the protruding height larger at the middle portion than at the outer edge and the inner edge.

### [ Present Invention 3 ]

The tire according to Present Invention 2, wherein the protruding height at the middle portion is 4 or less times the protruding height at the outer edge and the inner edge.

### [ Present Invention 4 ]

The tire according to Present Invention 2 or 3, wherein the protruding height at the middle portion is in the range from 5% to 50% of a tire thickness passing through the middle portion.

### [ Present Invention 5 ]

The tire according to any one of Present Inventions 2 to 4, wherein
the raised portion includes an outward surface facing outward in the tire axial direction,
the mark portion includes a recessed space recessed axially inward from the outward surface, and
the recessed space has a depth in the tire axial direction in the range from 30% to 80% of the protruding height at the middle portion.

### [ Present Invention 6 ]

The tire according to any one of Present Inventions 1 to 5, wherein
the raised portion includes an outward surface facing outward in the tire axial direction,
the mark portion includes a recessed space recessed axially inward from the outward surface, and
the mark portion is provided with a serration in which a plurality of ridges is arranged in the recessed space.

### [ Present Invention 7 ]

The tire according to Present Invention 6, wherein the ridges have a maximum height in the range from 30% to 70% of a depth of the recessed space.

### [ Present Invention 8 ]

The tire according to Present Invention 6 or 7, wherein the recessed space has a length in a tire radial direction in the range from 50% to 90% of a length in the tire radial direction of the raised portion.

### [ Present Invention 9 ]

The tire according to any one of Present Inventions 1 to 8, wherein the raised portion has a length in a tire radial direction in the range from 5% to 30% of a tire section height.

### [ Present Invention 10 ]

The tire according to any one of Present Inventions 1 to 9, wherein
the at least one of the sidewall portions is provided with outer raised portions raised axially outward from the reference surface, and
the outer raised portions are spaced apart outward in a tire radial direction from the raised portion.

### [ Present Invention 11 ]

The tire according to Present Invention 10, wherein the outer raised portions are arranged in the tire circumferential direction.

### [ Present Invention 12 ]

The tire according to Present Invention 10 or 11, wherein
the raised portion has a middle portion in the tire radial direction and a protruding height in the tire axial direction from the reference surface,
the outer raised portions have a protruding height in the tire axial direction from the reference surface, and
the protruding height of the outer raised portions is equal to or smaller than the protruding height at the middle portion of the raised portion.

### [ Present Invention 13 ]

The tire according to any one of Present Inventions 1 to 12, wherein
the at least one of the sidewall portions includes a first rubber portion forming the raised portion and a second rubber portion forming the reference surface, and
the first rubber portion has a rubber hardness larger than a rubber hardness of the second rubber portion.

### [ Description of Reference Signs ]

- 1: tire
- 3: sidewall portion
- 3s: reference surface
- 10: raised portion
- 13: mark portion
- M: tire maximum width position

## Claims

1. A tire comprising:
a pair of sidewall portions; and
a raised portion provided in at least one of the sidewall portions and raised outward in a tire axial direction from a reference surface of the at least one of the sidewall portions, wherein
the raised portion extends continuously in a tire circumferential direction in an annular shape,
the raised portion includes a tire maximum width position, and
the raised portion is provided with a mark portion including a plurality of characters recessed axially inward.

2. The tire according to claim 1, wherein
the raised portion includes an outer edge in a tire radial direction, an inner edge in the tire radial direction, a middle portion in the tire radial direction, and a protruding height in the tire axial direction from the reference surface, and
the raised portion has the protruding height larger at the middle portion than at the outer edge and the inner edge.

3. The tire according to claim 2, wherein the protruding height at the middle portion is 4 or less times the protruding height at the outer edge and the inner edge.

4. The tire according to claim 2 or claim 3, wherein the protruding height at the middle portion is in the range from 5% to 50% of a tire thickness passing through the middle portion.

5. The tire according to one of claims 2 to 4, wherein
the raised portion includes an outward surface facing outward in the tire axial direction,
the mark portion includes a recessed space recessed axially inward from the outward surface, and
the recessed space has a depth in the tire axial direction in the range from 30% to 80% of the protruding height at the middle portion.

6. The tire according to one of claims 1 to 5, wherein
the raised portion includes an outward surface facing outward in the tire axial direction,
the mark portion includes a recessed space recessed axially inward from the outward surface, and
the mark portion is provided with a serration in which a plurality of ridges is arranged in the recessed space.

7. The tire according to claim 6, wherein the ridges have a maximum height in the range from 30% to 70% of a depth of the recessed space.

8. The tire according to claim 6 or claim 7, wherein the recessed space has a length in a tire radial direction in the range from 50% to 90% of a length in the tire radial direction of the raised portion.

9. The tire according to any one of claims 1 to 8, wherein the raised portion has a length in a tire radial direction in the range from 5% to 30% of a tire section height.

10. The tire according to any one of claims 1 to 9, wherein
the at least one of the sidewall portions is provided with outer raised portions raised axially outward from the reference surface, and
the outer raised portions are spaced apart outward in a tire radial direction from the raised portion.

11. The tire according to claim 10, wherein the outer raised portions are arranged in the tire circumferential direction.

12. The tire according to claim 10 or claim 11, wherein
the raised portion has a middle portion in the tire radial direction and a protruding height in the tire axial direction from the reference surface,
the outer raised portions have a protruding height in the tire axial direction from the reference surface, and
the protruding height of the outer raised portions is equal to or smaller than the protruding height at the middle portion of the raised portion.

13. The tire according to any one of claims 1 to 12, wherein
the at least one of the sidewall portions includes a first rubber portion forming the raised portion and a second rubber portion forming the reference surface, and
the first rubber portion has a rubber hardness larger than a rubber hardness of the second rubber portion.
